# EUROPEAN PATENT SPECIFICATION

(11) **EP 2 784 900 B1**
(45) Date of publication and mention of the grant of the patent: **13.09.2017**
(21) Application number: 12851903.0
(22) Date of filing: 19.11.2012
(51) Int. Cl.: H02J 7/00, B60L 11/18, H02J 7/35

(54) **POWER SUPPLY SYSTEM**
STROMVERSORGUNGSSYSTEM
SYSTÈME D'ALIMENTATION EN ÉNERGIE

(30) Priority: 21.11.2011 JP 2011254363
(43) Date of publication of application: 01.10.2014
(73) Proprietor: Panasonic Intellectual Property Management Co., Ltd., Osaka-shi, Osaka 540-6207 (JP)
(72) Inventor: MASUDA, Takuya, Osaka 540-6207 (JP); KOBAYASHI, Susumu, Osaka 540-6207 (JP)
(74) Representative: Appelt, Christian W.
(86) International application number: PCT/JP2012/007409
(87) International publication number: WO 2013/076956

(56) References cited:
- WO-A1-2011/068154
- JP-A- 2001 008 380
- JP-A- 2009 159 734
- JP-A- 2010 041 819
- US-A- 5 315 227
- US-A1- 2011 055 037
- US-A1- 2011 234 150

## Description

### Technical Field

The present invention relates to a power supply system for supplying power to an electric vehicle.

### Background Art

As a technology for charging power to an electric vehicle, one described in the below-mentioned Patent Document 1 has been known. In this Patent Document 1, a technology that compares costs of power obtained by a photovoltaic unit, power generated late in the night and general electric power from an external system and preferentially supplies lower-cost electric power to home electric equipment, a secondary cell for a house, and a secondary cell for an electric vehicle is described.

However, even with the configuration for charging commercial electric power and power of a secondary cell and photovoltaic cell to an electric vehicle, power that exceeds the capacity of a converter (inverter) cannot be charged to an electric vehicle and electric charge over a long period of time is required. On the other hand, if the capacity of the converter is increased, cost is increased along with the increased size of the converter. Moreover, it may cause lowered power conversion efficiency in a stationary condition.

Therefore, the present invention has been made in consideration of the above-mentioned situation and aims at providing a power supply system which enables fast charging without increasing the capacity of power conversion.

### Prior Art Document

### Patent Document

Patent Document 1: Japanese Unexamined Patent Application No. H11-178237

US 2011/0055037 A1 describes a charging system detachably drawing from a power source, the system comprising: (a) an electrical output configuration; (b) an electrical input configuration; and (c) an energy store configuration; and methods of provisioning the energy store, the charging system, and electric vehicle charger devices.

### Summary of Invention

A power supply system according to a first embodiment of the present invention includes a first power converting part which is connected to a solar cell to convert power supplied from the solar cell and to output the power to an in-house power wiring provided inside a house, a second power converting part which can convert power supplied from the in-house power wiring via a first route and supply the power to an electric vehicle through an electric vehicle wiring, a first relay provided between the in-house power wiring and the first converting part, a second relay provided between the first converting part and the second converting part, a joint part provided to the second converting part and connected via the second relay and a second route, and a controller which turns the first relay off and at the same time turns the second relay on to cause an aggregated power of the power converted by the second power converting part and the power supplied to the joint part via the second route to be outputted to the electric vehicle through the electric vehicle wiring.

A power supply system according to a second embodiment of the present invention includes a first power converting part which is connected to a storage battery to convert power supplied from the storage battery and to output the power to an in-house power wiring provided inside a house, a second power converting part which can convert power supplied from the in-house power wiring via a first route and supply the power to an electric vehicle via an electric vehicle wiring, a first relay provided between the in-house power wiring and the first converting part, a second relay provided between the first converting part and the second converting part, a joint part provided to the second converting part and connected via the second relay and a second route, and a controller which turns the first relay off and at the same time turns the second relay on to cause an aggregated power of the power converted by the second power converting part and the power supplied to the joint part via the second route to be outputted to the electric vehicle through the electric vehicle wiring.

A power supply system according to a third embodiment of the present invention includes a first power converting part which is connected to a fuel cell to convert power supplied from the fuel cell and to output the power to an in-house power wiring provided inside a house, a second power converting part which can convert power supplied from the in-house power wiring via a first route and supply the power to an electric vehicle via an electric vehicle wiring, a first relay provided between the in-house power wiring and the first converting part, a second relay provided between the first converting part and the second converting part, a joint part provided to the second converting part and connected via the second relay and a second route, and a controller which turns the first relay off and at the same time turns the second relay on to cause an aggregated power of the power converted by the second power converting part and the power supplied to the joint part via the second route to be outputted to the electric vehicle through the electric vehicle wiring.

A power supply system according to a fourth embodiment is any of first to third embodiments further including a third power converting part to which a power source for outputting power other than the cell connected to the first power converting part is connected to convert power supplied from the power source for outputting power and to output the power to an in-house power wiring provided inside a house, a third relay provided between the third converting part and the in-house power wiring, and a fourth relay provided in a third route for connecting the third power converter and the second power converting part, wherein the joint part is connected with the fourth relay via the third relay and the controller which turns the first relay off and at the same time turns the second relay on to cause an aggregated power of the power converted by the second power converting part, the power supplied to the joint part via the second route and the power supplied to the joint part via the third route to be outputted to the electric vehicle through the electric vehicle wiring.

### Brief Description of the Drawings

[Fig. 1] Fig. 1 is a block diagram showing configuration of a power supply system shown as a first embodiment of the present invention.
[Fig. 2] Fig. 2 is a block diagram showing a power supply system as a comparative example.
[Fig. 3] Fig. 3 is a block diagram showing configuration of a power supply system shown as a second embodiment of the present invention.
[Fig. 4] Fig. 4 is a block diagram showing configuration of a power supply system shown as a third embodiment of the present invention.
[Fig. 5] Fig. 5 is a block diagram showing configuration of a power supply system shown as a fourth embodiment of the present invention.

### Description of Embodiments

Hereinafter, embodiments of the present invention will be explained with reference to figures.

### [First embodiment]

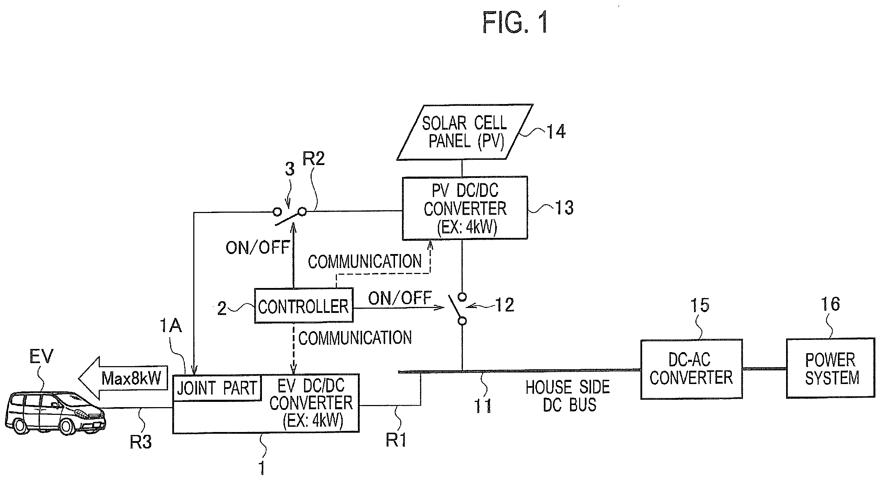

A power supply system shown as a first embodiment of the present invention is configured as in Fig. 1, for example. This power supply system charges and discharges power to/from a secondary cell mounted on an electric vehicle EV.

This power supply system includes an EV DC/DC converter 1, a controller 2, and a fast charging and discharging relay 3. Moreover, this power supply system includes an in-house relay 12 connected to a house side bus 11, a PV DC/DC converter 13, and a photovoltaic panel (PV) 14. In addition, this power supply system includes a DC-AC converter 15 connected with the house side bus 11. This DC-AC converter 15 is connected with an electric power system 16.

For this power supply system, positions for installation of the EV DC/DC converter 1, the controller 2, the fast charging and discharging relay 3, the house side bus 11, the in-house relay 12, the PV DC/DC converter 13, and the solar cell panel 14 are not limited. Therefore, in the power supply system, the EV DC/DC converter 1, the controller 2, and the fast charging and discharging relay 3 may be configured by a different device. Moreover, the EV DC/DC converter 1, the controller 2, and the fast charging and discharging relay 3 may be positioned inside the house.

The PV DC/DC converter 13 (first power converting part) is connected with the solar cell panel 14. The PV DC/DC converter 13 converts the voltage of electric power supplied from the solar cell panel 14 into a voltage usable in the house. The PV DC/DC converter 13 outputs the converted electric power to the house side bus 11 as an in-house electric power wire provided in the house when the in-house relay 12 is turned on (connected state). On the other hand, the PV DC/DC converter 13 can supply electric power generated by the solar cell panel 14 to a fast charging/discharging route R2 when the in-house relay 12 is turned off (disconnected state).

Moreover, the PV DC/DC converter 13 can communicate with the controller 2. The PV DC/DC converter 13 is activated or stopped by a control signal supplied from the controller 2.

In the present embodiment, the PV DC/DC converter 13 is configured to output, for example, 4kW of electric power per unit time.

The in-house relay 12 (first relay) is provided between the PV DC/DC converter 13 and the house side bus 11. The in-house relay 12 is switched between on (connected) state and off (disconnected) state by the controller 2.

The fast charging and discharging relay 3 (second relay) is provided to a second route R2 for connecting the PV DC/DC converter 13 and the EV DC/DC converter 1. The fast charging and discharging relay 3 is switched in on (connected) state and off (disconnected) state by the controller 2.

The EV DC/DC converter 1 (second power converting part) can be connected with an electric vehicle EV via an electric vehicle wiring R3. The EV DC/DC converter 1 converts a power supplied from the house side bus 11 via a normal charging/discharging route R1 as a first route. Specifically, the EV DC/DC converter 1 can increase or decrease the voltage supplied from the house side bus 11 and supply the power to the electric vehicle EV. Moreover, in a case where power is supplied from the electric vehicle EV, the EV DC/DC converter 1 increases or decreases the voltage and supplies the power to the house side bus 11a. Voltage for an electric vehicle EV is between 0 and 500V and voltage for the house side bus 11 is between 300 and 400V, for example.

In the present embodiment, the EV DC/DC converter 1 is configured to output, for example, 4kW of electric power per unit time.

A joint part 1A where the fast charging/discharging route R2 as the second route is connected is provided to the EV DC/DC converter 1. The joint part 1A supplies an aggregated power of electric power supplied via the fast charging and discharging relay 3 on the fast charging/discharging route R2 and electric power converted by the EV DC/DC converter 1 to the electric vehicle EV. The joint part 1A may be configured to aggregate converted electric power of the PV DC/DC converter 13 and converted electric power of the EV DC/DC converter 1 and circuit configuration of the joint part 1A is not particularly limited.

The controller 2 supplies a control signal for switching the fast charging and discharging relay 3 and the in-house relay 12 between on state and off state. Moreover, the controller 2 carries out communication so that operation of the EV DC/DC converter 1 and operation of the PV DC/DC converter 13 can be synchronized. The term "synchronized" means a condition where the EV DC/DC converter 1 and the PV DC/DC converter 13 are simultaneously operated and the electric power converted by the EV DC/DC converter 1 and the converted electric power of the PV DC/DC converter 13 can be simultaneously supplied to the joint part 1A.

The controller 2 causes the in-house relay 12 to be in on state and causes the fast charging and discharging relay 3 to be in off state when charging of the electric vehicle EV is carried out with normal charging/discharging amount of power per unit time. Moreover, the controller 2 does not carry out a control to synchronize the operation of the EV DC/DC converter 1 and the PV DC/DC converter 13. Thus, the EV DC/DC converter 1 can supply predetermined electric power (4kW per unit time) in a condition where the electric vehicle EV is connected by the electric vehicle wiring R3.

On the other hand, the controller 2 can carry out fast charging of the electric vehicle EV. At this time, the controller 2 turns the in-house relay 12 off (disconnected) and at the same time turns the fast charging/discharging relay 3 on. In this condition, the controller 2 synchronizes the operation of the EV DC/DC converter 1 and operation of the PV DC/DC converter 13. Thus, the controller 2 causes an aggregation of the electric power converted by the EV DC/DC converter 1 and electric power supplied to the joint part 1A via the rapid charging/discharging route R2 (second route) to be outputted to the electric vehicle EV through the electric vehicle wiring R3. Specifically, 8kW of electric power per unit time, a sum of 4kW of converted electric power from the EV DC/DC converter 1 and 4kW of converted electric power from the PV DC/DC converter 13, can be supplied.

As described above, according to this power supply system, converted electric power from the EV DC/DC converter 1 and converted electric power from the PV DC/DC converter 13 are aggregated and the electric power thus aggregated can be supplied to the electric vehicle EV. Thus, according to the power supply system, it becomes possible to carry out rapid charging without increasing the power conversion capacity of the EV DC/DC converter 1.

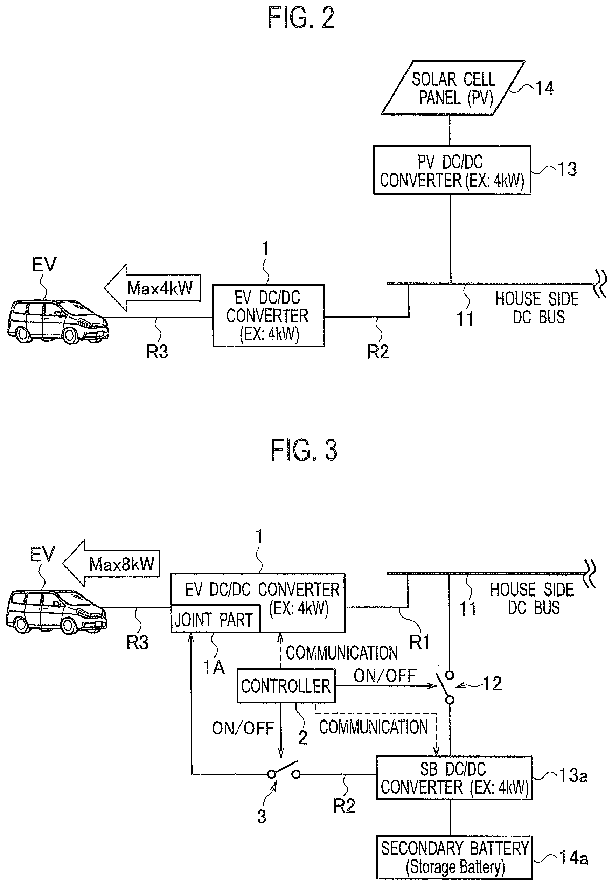

Here, a power supply system as a comparative example is as in Fig. 2, for example. According to this power supply system, power exceeding the capacity of the EV DC/DC converter 1 cannot be outputted to the electric vehicle EV. Moreover, increase in capacity of the EV DC/DC converter 1 results in increased size and cost.

However, the PV DC/DC converter 13 and the EV DC/DC converter 1 are connected and the in-house relay 12 for disconnecting the PV DC/DC converter 13 and the house side bus 11 are provided to the power supply system of the present embodiment. According to such power supply system, since the system has a simple configuration in which relays and wires are added, it becomes possible to realize fast charging with smaller equipment size and lower cost than installing a high-capacity EV DC/DC converter 1.

### [Second embodiment]

Next, a power supply system according to a second embodiment will be explained. Note that same numerical references will be denoted for the same parts as in the above-described first embodiment and specific explanation thereof will be omitted.

The power supply system shown as the second embodiment is configured as shown in, for example, Fig. 3. The power supply system shown as the second embodiment includes a storage battery 14a instead of the solar cell panel 14 and includes an SB DC/DC converter 13a instead of the PV DC/DC converter 13.

The storage battery 14a is a so-called storage battery. The storage battery 14a accumulates power supplied from the power system 16 via the DC-AC converter 15, the house side bus 11, and the SB DC/DC converter 13a. Moreover, the storage battery 14a may accumulate the power of a solar cell panel, a fuel cell or the like via the SB DC/DC converter 13a.

The SB DC/DC converter 13a can supply power accumulated in the storage battery 14a to the house side bus 11 when the in-house relay 12 is in an on-state (connected). The SB DC/DC converter 13a can supply power accumulated in the storage battery 14a to the fast charging and discharging route R2 when the in-house relay 12 is in an off-state (disconnected).

In such a power supply system, similarly to the above-described first embodiment, the in-house relay 12 is remained in an on-state and the fast charging and discharging relay 3 is remained in an off-state when charging the electric vehicle EV with the normal charging power per unit time. Moreover, the controller 2 does not carry out the control to synchronize the operation of the EV DC/DC converter 1 and the operation of the SB DC/DC converter 13a. Thus, the EV DC/DC converter 1 can supply a predetermined amount of power (4kW per unit time) to the electric vehicle EV in a condition where the electric vehicle EV is connected by the electric vehicle wiring R3.

On the other hand, the controller 2 can carry out fast charging to the electric vehicle EV. At this time, the controller 2 turns the in-house relay 12 off (disconnect) and at the same time turns the fast charging and discharging relay 3 on. Moreover, the controller 2 synchronizes the operation of the EV DC/DC converter 1 and the operation of the SB DC/DC converter 13a. Thus, the controller 2 causes the power obtained by aggregating the power converted by the EV DC/DC converter 1 and the power supplied to the joint part 1A via the fast charging and discharging route R2 (second route) to be outputted to the electric vehicle EV through the electric vehicle wiring R3.

As described above, according to this power supply system, converted power of the EV DC/DC converter 1 and converted power of the SB DC/DC converter 13a are aggregated and the power thus aggregated can be supplied to the electric vehicle EV. Thus, according to the power supply system, it becomes possible to carry out fast charging without increasing the power conversion capacity of the EV DC/DC converter 1.

### [Third embodiment]

Next, a power supply system according to a third embodiment will be explained. Note same numerical references will be denoted for the same parts as in the above-described first embodiment and specific explanation thereof will be omitted.

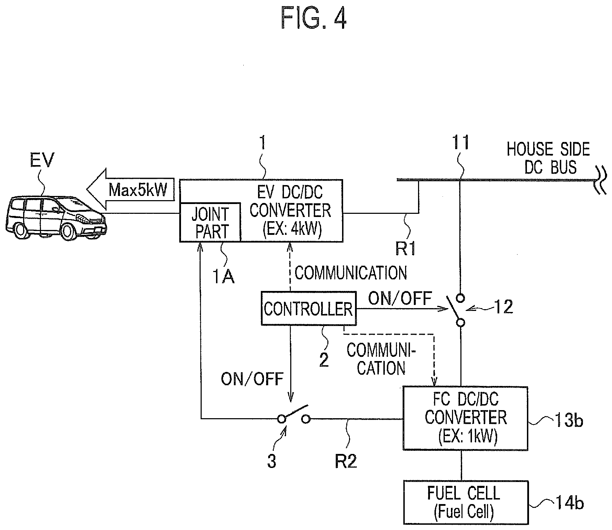

The power supply system shown as the third embodiment is configured as shown in Fig. 4, for example. The power supply system shown as the second embodiment includes a fuel cell 14b instead of the solar cell panel 14 and an FC DC/DC converter 13b instead of the PV DC/DC converter 13.

The fuel cell 14b generates power when, for example, hydrogen as a fuel gas and air as an oxidant gas are supplied. The fuel cell 14b can supply the generated power to the house side bus 11 or the fast charging and discharging route R2 via the FC DC/DC converter 13b.

The FC DC/DC converter 13b can supply the generated power of the fuel cell 14a to the house side bus 11 when the in-house relay 12 is in an on-state (connected). The FC DC/DC converter 13b can supply the generated power of the fuel cell 14a to the fast charging and discharging route R2 when the in-house relay 12 is in an off-state (disconnected).

In such a power supply system also, similarly to the above-described first embodiment, the in-house relay 12 is remained in an on-state and the fast charging and discharging relay 3 is remained in an off-state when charging the electric vehicle EV with the normal charging power per unit time. Moreover, the controller 2 does not carry out the control to synchronize the operation of the EV DC/DC converter 1 and the operation of the FC DC/DC converter 13b. Thus, the EV DC/DC converter 1 can supply a predetermined amount of power (4kW per unit time) to the electric vehicle EV in a condition where the electric vehicle EV is connected by the electric vehicle wiring R3.

On the other hand, the controller 2 can carry out fast charging to the electric vehicle EV. At this time, the controller 2 turns the in-house relay 12 off (disconnect) and at the same time turns the fast charging and discharging relay 3 on. Moreover, the controller 2 synchronizes the operation of the EV DC/DC converter 1 and the operation of the FC DC/DC converter 13b. Thus, the controller 2 causes the power obtained by aggregating the power converted by the EV DC/DC converter 1 and the power supplied to the joint part 1A via the fast charging and discharging route R2 (second route) to be outputted to the electric vehicle EV through the electric vehicle wiring R3.

As described above, according to this power supply system, converted power of the EV DC/DC converter 1 and converted power of the FC DC/DC converter 13b are aggregated and the power thus aggregated can be supplied to the electric vehicle EV. Thus, according to the power supply system, it becomes possible to carry out fast charging without increasing the power conversion capacity of the EV DC/DC converter 1.

### [Fourth embodiment]

Next, a power supply system according to a fourth embodiment will be explained. Note same numerical references will be denoted for the same parts as in the above-described first embodiment and specific explanation thereof will be omitted.

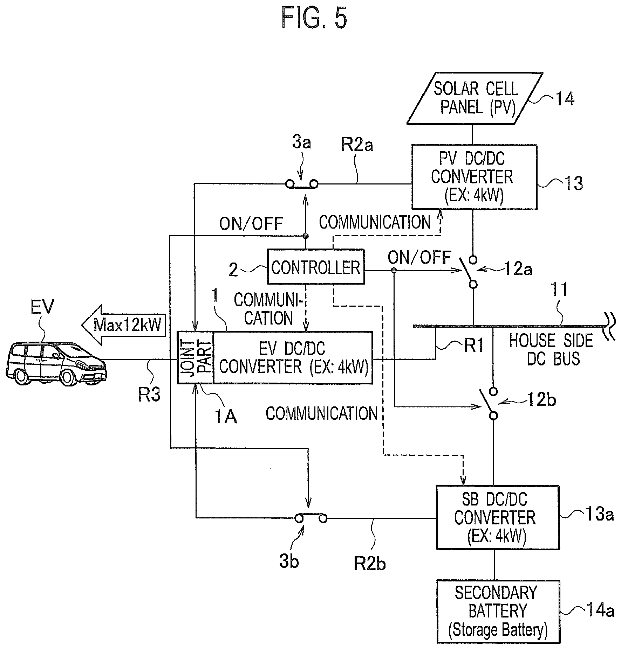

The power supply system shown as the fourth embodiment includes a power source for power output other than the solar cell panel 14 connected to the PV DC/DC converter 13 in the above-described power supply system of the first embodiment. The power source for power output may include a photovoltaic cell, a storage battery, fuel cell, an AC power system, or other power sources. Fig. 5 shows a storage battery 14a as the battery for power output. Note that although the present embodiment includes the solar cell panel 14 and the storage battery 14a as the power source for power output, it is needless to say that a fuel cell 14b may be included in the system in addition to the above.

An in-house relay 12a and a fast charging and discharging relay 3a are connected to the PV DC/DC converter 13 of the power supply system, similarly to the first embodiment. The PV DC/DC converter 13 outputs the converted power to the EV DC/DC converter 1 via the fast charging and discharging route R2 when the in-house relay 12a is in an off-state (disconnected) and at the same time the fast charging and discharging relay 3 is in an on-state, similarly to the above.

This power supply system includes an SB DC/DC converter 13a (third power converting part) for converting power supplied from the storage battery 14a as the battery for power output and outputting the power to the house side bus 11 provided inside the house. Moreover, this power supply system includes an in-house relay 12b (third relay) connected with the SB DC/DC converter 13a and a fast charging and discharging relay 3b (fourth relay).

The in-house relay 12b is provided between the SB DC/DC converter 13a and the house side bus 11. On-off control of the in-house relay 12b is carried out by the control of the controller 2 similarly to the in-house relay 12a.

The fast charging and discharging relay 3b is connected with a fast charging and discharging route R2b (third route) for connecting the SB DC/DC converter 13a and the EV DC/DC converter 1. On-off control of the fast charging and discharging relay 3b is carried out by the control of the controller 2 similarly to the fast charging and discharging relay 3a.

The joint part 1A of the EV DC/DC converter 1 is connected with the fast charging and discharging relay 3a and the fast charging and discharging relay 3b. Converted power is supplied to the joint part 1A from the PV DC/DC converter 13 and the SB DC/DC converter 13a in a condition where the fast charging and discharging relay 3a and the fast charging and discharging relay 3b are in an on-state. Thus, the joint part 1A causes the power which is aggregation of the converted power from the EV DC/DC converter 1, the converted power from the PV DC/DC converter 13 and the converted power from the SB DC/DC converter 13a to be outputted to the electric vehicle EV through the electric vehicle wiring R3.

In a case where the respective converted power of the EV DC/DC converter 1, the PV DC/DC converter 13 and the SB DC/DC converter 13a is 4kW, for example, the joint part 1A can supply 12kW of power to the electric vehicle EV.

As described above, according to this power supply system, power of a plurality of separate power sources can be aggregated. Specifically, converted power of the FC DC/DC converted 13b is aggregated with the converted power of the EV DC/DC converter 1 and the power thus aggregated can be supplied to the electric vehicle EV. Thus, according to the power supply system, it becomes possible to carry out fast charging without increasing the power conversion capacity of the EV DC/DC converter 1.

Note that the above-described embodiment is an example of the present invention. Therefore, it is needless to say that the present invention is not limited to the above-described embodiment and any modification other than the embodiment can be made depending on the design or the like within the scope of technical idea according to the invention.

Entire content of the Japanese Patent Application No. 2011-254363 (date of application: November 21, 2011) is incorporated herein.

### Industrial Applicability

According to the present invention, aggregated power of converted power of a first power converter connected with a solar cell, a storage battery or a fuel cell, and converted power of a second power converter connected with an in-house power wiring can be outputted to an electric vehicle and therefore it becomes possible to realize fast charging without increasing the power conversion capacity.

### Explanation of References

1 EV DC/DC converter (second power converting part)
1A Joint part
2 Controller
3 Fast charging and discharging relay (second relay)
3b Fast charging and discharging relay (fourth relay)
11 House side bus (in-house power wiring)
12 In-house relay (first relay)
12a In-house relay (first relay)
12b In-house relay (third relay)
13 PV DC/DC converter (first power converting part)
13a SB DC/DC converter (first power converting part, third power converting part)
13b FC DC/DC converter (first power converting part)
14 Solar cell panel
14a Storage battery
14b Fuel cell
EV Electric vehicle
R1 Normal charging and discharging route (first route)
R3 electric vehicle wiring (electric vehicle wiring)
R2 Fast charging and discharging route (second route)
R2b Fast charging and discharging route (third route)

## Claims

1. A power supply system comprising:
a first power converting part (13) which is connected to a power source (14, 14a, 14b) to convert power supplied from the power source and to output the power to an in-house power wiring (11) provided inside a house via a first relay (12); a second power converting part (1) configured to convert power supplied from the in-house power wiring (11) via a first route (R1) and to supply the power to an electric vehicle through an electric vehicle wiring (R3); the first relay (12) being provided between the in-house power wiring (11) and the first power converting part (13);
a second relay (3) provided between the first power converting part (13) and the second power converting part (1) in a second route (R2), and
a joint part (1A) provided to the second power converting part (1) and connected via the second relay (3) and the second route (R2);
**characterized by**
a controller (2) which is configured to turn the first relay (12) off and at the same time turn the second relay (3) on to cause an aggregated power of the power converted by the second power converting part (1) and the power supplied from the first power converting part (13) to the joint part via the second route (R2) and the second relay (3) to be outputted to the electric vehicle via the electric vehicle wiring (R3).

2. The power supply system of claim 1, wherein the power source includes a solar cell (14), a storage battery (14a) or a fuel cell (14b).

3. A power supply system according to claim 1 or 2, further comprising:
a third power converting part (13a) to which a power source for outputting power other than the power source connected to the first power converting part (13) is connected to convert power supplied from the power source for outputting power and to output the power to an in-house power wiring (11) provided inside a house;
a third relay (12b) provided between the third power converting part (13a) and the in-house power wiring (11); and
a fourth relay (3b) provided in a third route (R2b) for connecting the third power converting part (13a) and the second power converter (13a), wherein
the joint part (1A) is connected with the fourth relay (3b) via the third route (R2b), and
the controller (2) is configured to turn the first relay (12) and the third relay (12b) off and at the same time turns the second relay (3) and the fourth relay (3b) on and causes an aggregated power of the power converted by the second power converting part (13), the power supplied to the joint part (1A) via the second route (R2), and the power supplied to the joint part (1A) via the third route (R2b) to be outputted to the electric vehicle through the electric vehicle wiring (R3).

## Patentansprüche

1. Stromversorgungssystem, das umfasst:
ein erstes Stromrichterteil (13), das mit einer Stromquelle (14, 14a, 14b) verbunden ist, um Strom, der von der Stromquelle geliefert wird, umzuwandeln und den Strom über ein erstes Relais (12) an eine gebäudeinterne Verkabelung (11) auszugeben, die im Inneren eines Gebäudes vorgesehen ist;
ein zweites Stromrichterteil (1), das dazu eingerichtet ist, Strom, der von der gebäudeinternen Verkabelung (11) über einen ersten Zweig (R1) geliefert wird, umzuwandeln und den Strom über ein Elektrofahrzeugkabelsystem (R3) einem Elektrofahrzeug zuzuführen;
wobei das erste Relais (12) zwischen der gebäudeinternen Verkabelung (11) und dem ersten Stromrichterteil (13) vorgesehen ist;
ein zweites Relais (3), das in einem zweiten Zweig (R2) zwischen dem ersten Stromrichterteil (13) und dem zweiten Stromrichterteil (1) vorgesehen ist,
und ein Verbindungsteil (1A), das für das zweite Stromrichterteil (1) vorgesehen ist und über das zweite Relais (3) und den zweiten Zweig (R2) verbunden ist;
**gekennzeichnet durch**
eine Steuereinrichtung (2), die dazu eingerichtet ist, das erste Relais (12) auszuschalten und gleichzeitig das zweite Relais (3) einzuschalten, um einen kumulierten Strom des Stroms, der durch das zweite Stromrichterteil (1) umgewandelt wird, und des Stroms, der von dem ersten Stromrichterteil (13) über den zweiten Zweig (R2) und über das zweite Relais (3) dem Verbindungsteil zugeführt wird,
über das Elektrofahrzeugkabelsystem (R3) an das Elektrofahrzeug abzugeben.

2. Stromversorgungssystem nach Anspruch 1, wobei die Stromquelle eine Solarzelle (14), einen Akkumulator (14a) oder eine Brennstoffzelle (14b) beinhaltet.

3. Stromversorgungssystem nach Anspruch 1 oder 2, ferner aufweisend:
ein drittes Stromrichterteil (13a), an das eine Stromquelle zum Ausgeben von Strom einer anderen Quelle als der Stromquelle, die mit dem ersten Stromrichterteil (13) verbunden ist, angeschlossen ist, um Strom, der von der Spannungsquelle zur Ausgabe von Strom liefert wird, umzuwandeln und den Strom an eine gebäudeinterne Verkabelung (11) auszugeben, die im Inneren eines Gebäudes vorgesehen ist;
ein drittes Relais (12b), das zwischen dem dritten Stromrichterteil (13a) und der gebäudeinternen Verkabelung (11) vorgesehen ist; und
ein viertes Relais (3b), das in einem dritten Zweig (R2b) vorgesehen ist, um das dritte Stromrichterteil (13a) und den zweiten Stromrichter (1) zu verbinden, wobei das Verbindungsteil (1A) über den dritten Zweig (R2b) mit dem vierten Relais (3b) verbunden ist, und
wobei die Steuereinrichtung (2) dazu eingerichtet ist, das erste Relais (12) und das dritte Relais (12b) auszuschalten und gleichzeitig das zweite Relais (3) und das vierte Relais (3b) einzuschalten und einen kumulierten Strom des Stroms, der durch das zweite Stromrichterteil (13) umgewandelt ist, wobei der Strom über den zweiten Zweig (R2) zu dem Verbindungsteil (1A) geliefert wird, und des Stroms, der über den dritten Zweig (R2b) zu dem Verbindungsteil (1A) geliefert wird, über das Elektrofahrzeugkabelsystem (R3) an das Elektrofahrzeug abzugeben.

## Revendications

1. Système d'alimentation comprenant :
une première partie de conversion de puissance (13) qui est connectée à une source de puissance (14, 14a, 14b) pour convertir la puissance fournie par la source de puissance et pour délivrer la puissance à un câblage d'alimentation dans la maison (11) prévu à l'intérieur d'une maison par l'intermédiaire d'un premier relais (12) ;
une deuxième partie de conversion de puissance (1) configurée pour convertir la puissance fournie par le câblage d'alimentation dans la maison (11) par l'intermédiaire d'un premier trajet (R1) et pour fournir la puissance à un véhicule électrique par l'intermédiaire d'un câblage de véhicule électrique (R3) ;
le premier relais (12) étant prévu entre le câblage d'alimentation dans la maison (11) et la première partie de conversion de puissance (13) ;
un deuxième relais (3) prévu entre la première partie de conversion de puissance (13) et la deuxième partie de conversion de puissance (1) dans un deuxième trajet (R2), et
une partie de jonction (1A) prévue sur la deuxième partie de conversion de puissance (1) et connectée par l'intermédiaire du deuxième relais (3) et du deuxième trajet (R2) ;
**caractérisé par**
un contrôleur (2) qui est configuré pour ouvrir le premier relais (12) et en même temps fermer le deuxième relais (3) pour faire en sorte qu'une puissance agrégée de la puissance convertie par la deuxième partie de conversion de puissance (1) et de la puissance fournie par la première partie de conversion de puissance (13) à la partie de jonction par l'intermédiaire du deuxième trajet (R2) et du deuxième relais (3) soit délivrée au véhicule électrique par l'intermédiaire du câblage de véhicule électrique (R3).

2. Système d'alimentation selon la revendication 1, dans lequel la source de puissance comprend une cellule solaire (14), une batterie de stockage (14a) ou une pile à combustible (14b).

3. Système d'alimentation selon la revendication 1 ou 2, comprenant en outre :
une troisième partie de conversion de puissance (13a) à laquelle une source de puissance pour délivrer une puissance autre que la source de puissance connectée à la première partie de conversion de puissance (13) est connectée pour convertir la puissance fournie par la source de puissance pour délivrer la puissance et pour délivrer la puissance à un câblage d'alimentation dans la maison (11) prévu à l'intérieur d'une maison ;
un troisième relais (12b) prévu entre la troisième partie de conversion de puissance (13a) et le câblage d'alimentation dans la maison (11) ; et
un quatrième relais (3b) prévu dans un troisième trajet (R2b) pour connecter la troisième partie de conversion de puissance (13a) et le deuxième convertisseur de puissance (13a), dans lequel la partie de jonction (1A) est connectée au quatrième relais (3b) par l'intermédiaire du troisième trajet (R2b), et
le contrôleur (2) est configuré pour ouvrir le premier relais (12) et le troisième relais (12b) et en même temps fermer le deuxième relais (3) et le quatrième relais (3b) et faire en sorte qu'une puissance agrégée de la puissance convertie par la deuxième partie de conversion de puissance (13), de la puissance fournie à la partie de jonction (1A) par l'intermédiaire du deuxième trajet (R2) et de la puissance fournie à la partie de jonction (1A) par l'intermédiaire du troisième trajet (R2b) soit délivrée au véhicule électrique par l'intermédiaire du câblage de véhicule électrique (R3).
